Europäisches Patentamt

European Patent Office

Office européen des brevets

(11) Numéro de publication: **0 340 500 B2**

(12) ## NOUVEAU FASCICULE DE BREVET EUROPEEN

(45) Date de publication de nouveau fascicule du brevet: **06.09.95**

(51) Int. Cl.<sup>6</sup>: **A23B 9/00**, A23L 3/34

(21) Numéro de dépôt: **89106604.5**

(22) Date de dépôt: **13.04.89**

(54) **Protection d'un aliment contre l'oxydation.**

(30) Priorité: **06.05.88 CH 1715/88**

(43) Date de publication de la demande:
**08.11.89 Bulletin 89/45**

(45) Mention de la délivrance du brevet:
**02.12.92 Bulletin 92/49**

(45) Mention de la décision
concernant l'opposition:
**06.09.95 Bulletin 95/36**

(84) Etats contractants désignés:
**AT BE DE ES FR GB GR IT LU NL SE**

(56) Documents cités:
**DE-A- 3 503 505**
**US-A- 3 686 001**

**DERWENT FILE SUPPLIER WPI, abstract no.
76-76956x, Derwent Publications, London,
GB; & JP-A-76 032 703**

**DERWENT FILE SUPPLIER WPI, abstract no.
72-42192t, Derwent Publication, London, GB;
& JP-A-72 022 269**

(73) Titulaire: **SOCIETE DES PRODUITS NESTLE S.A.**
**Case postale 353**
**CH-1800 Vevey (CH)**

(72) Inventeur: **Burri, Josef**
**Ch. de la Pierraz 25**
**CH-1066 Epalinges (CH)**
Inventeur: **Graf, Manfred Paul**
**Chemin de la Baye 12**
**CH-1807 Blonay (CH)**
Inventeur: **Lambelet, Pierre**
**Tour Ronde 7**
**CH-1806 St-Legier (CH)**
Inventeur: **Loeliger, Jürg**
**Chemin de Pierre à Fleur 6**
**CH-1802 Corseaux (CH)**

EP 0 340 500 B2

FOOD SCIENCE AND TECHNOLOGY, abstract no. 70-06-T0204 (70025312); K. LEMESHEK: "Chemical substances for foodstuffs conservation"

1.Josef Burri et al J Sei. Food Agric 48,49-56 (1989)

2.Extraits de "The Merck Index, 9th Ed." P1275+17+1126

Pyenson, H, and Tracy, P.H. in Journal of Diary Science, 33, 815-819(1950)

Kirk-Othmer's Encyclopedia of Chemical Technology, 1951, 589-590

Pyenson, H. and Tracy, P.H. in Journal of Diary Science, 31, 539-550 (1948)

Thiel, C.C. in J. Council Sci.Ind, Research, 18, 391-406 (1945)

Narayanan, K.M. et al in Food Sci., 6, 245-248 (1957)

**Description**

La présente invention a pour objet un procédé de protection d'un aiment contre l'oxydation, ainsi qu'une utilisation de la vanilline à cet effet.

La vanilline est connue pour son fort pouvoir aromatisant. Elle trouve ainsi des utilisations connues comme agent aromatisant de produits alimentaires tels que crèmes, crèmes glacées ou chocolats par exemple.

On sait par ailleurs que certains dérivés liposolubles de la vanilline, notamment certains vanillylacylamides peuvent être utilisés pour la protection des aliments contre l'oxydation.

On connaît par le document DERWENT FILE SUPPLIER WPI, abstract No 76-76956x (JP-A-76032703, NAGASIKIYA K.K.), un procédé de stérilisation d'un cake par imprégnation avec une solution alcoolique de vanilline, conditionnement en film plastique ou alu et chauffage du cake emballé à la vapeur à 100° C durant 20 à 30 min.

On connaît également par le document DERWENT FILE SUPPLIER WPI, abstract No 72-42192t (JP-A-72022269, NIPPON SHINYAKU CO. LTD), un procédé de conservation des saucisses de Vienne par mélange avec de la vanilline en combinaison possible avec de l'acrylamide ou de l'acide sorbique.

Journal of Dairy Science **33**, 815-819 (1950) étudie les propriétés antioxydantes de vanilles ajoutées à des mélanges liquides pour crèmes glacées en poudre au moment du préchauffage, juste avant le séchage par atomisation.

Journal of Dairy Science **31**, 539-550 (1948) décrit la préparation d'une crème en poudre foisonnable par injection de gaz après reconstitution et divulgue les propriétés antioxygènes de la vanille ajoutée au mélange pour crème avant séchage.

La présente invention a pour but de proposer un procédé de protection efficace d'un aliment à l'aide d'une substance généralement reconnue comme inoffensive pour l'organisme humain.

A cet effet, le procédé de protection d'un aliment sous forme subdivisée et sèche contre l'oxydation est caractérisé par le fait que l'on ajoute de la vanilline à l'aliment, à raison de 5-5000 $\mu$g de vanilline par g de matière sèche de l'aliment.

Si l'on ajoute moins de 5 $\mu$g de vanilline par g de matière sèche de l'aliment, on risque de ne pas obtenir une protection appréciable de l'aliment contre l'oxydation. Si l'on ajoute plus de 5000 $\mu$g/g, on risque de ne pas obtenir une protection notablement plus grande que celle que l'on peut obtenir en ajoutant des quantités comprises dans le domaine indiqué.

Dans le présent exposé, le terme vanilline doit être compris comme couvrant chacune des quelques substances de formules identiques ou voisines connues pour leur pouvoir aromatisant caractéristique de la vanille, notamment le principe actif d'un extrait de vanilla planifolia Andr. (Orchidacea), à savoir le 3-methoxy-4-hydroxy-benzaldehyde, la substance synthétisée à partir d'eugénol ou de lignine qui présente la même structure, ou le 3-ethoxy-4-hydroxy-benzaldehyde.

Pour mettre en oeuvre le présent procédé ou réaliser la présente utilisation, on peut donc utiliser un extrait naturel contenant la vanilline, une vanilline naturelle purifiée ou une vanilline synthétisée. On utilise de préférence la vanilline purifiée sous forme de poudre fine ou en solution alcoolique, par exemple.

On peut ajouter la vanilline à l'aliment par mélange intime avec l'aliment au cours de ou après sa fabrication. Ceci présuppose que l'aliment ou ses constituants se présentent de préférence sous forme subdivisée, sèche, pâteuse ou liquide au cours de ou après la fabrication.

Etant donné la volatilité de la vanilline, il est préférable de réaliser ce mélange intime à une température relativement modérée et d'éviter ensuite des traitements thermiques trop poussés.

C'est ainsi que l'on préfère réaliser ce mélange intime à sec, après le séchage, dans le cas d'une production de flocons déshydratés par séchage sur cylindre d'une suspension aqueuse de matière alimentaire, par exemple.

Le fait que la vanilline confère effectivement une protection d'un aliment contre l'oxydation par simple addition finale à sec sous forme de poudre, constitue l'un des aspects les plus surprenants de la présente invention.

Les exemples ci-après sont présentés à titre d'illustration du procédé et de l'utilisation selon la présente invention. Les pourcentages y sont donnés en poids.

Exemple 1

Pour préparer des flocons de céréales précuits déshydratés, on moud la veille des grains de blé entier dans un moulin à marteaux. On prépare quatre lots de dispersion aqueuse de 5 kg de farine de blé dans 20 kg d'eau.

On traite thermiquement chaque lot durant 60 s à 130°C dans un échangeur de chaleur à surface râclée puis on sèche immédiatement chaque lot durant environ 10 s sur un séchoir à deux cylindres chauffés avec de la vapeur à 4 bar, jusqu'à une teneur en humidité résiduelle de 3,4 - 3,8%. On obtient ainsi quatre lots de flocons de céréales.

On maintient un lot sans vanilline pour comparaison. On ajoute à sec en brassant bien 100 $\mu$g de vanilline en poudre par g de flocons au second lot, 200 $\mu$g de vanilline en poudre par g de flocons au troisième lot et 500 $\mu$g de vanilline en poudre par g de flocons au quatrième lot.

On soumet les quatre lots à un test d'oxydation selon la procédure décrite ci-après:

Test d'oxydation

On dispose les flocons de céréales dans des boîtes en fer étamé laquées de 400 ml, à raison de 40 g de flocons d'un lot par boîte. On entrepose à 30°C les boîtes hermétiquement fermées.

On analyse les gaz de l'espace de tête de boîtes contenant des échantillons de flocons des quatre lots après 1, 2 et 3 mois en déterminant la teneur en pentane, comme produit secondaire de la dégradation de l'acide linoléique par oxydation, et la teneur en oxygène résiduel. On détermine la teneur en pentane (en M de pentane dans 5 ml de gaz d'espace de tête à 1013 mbar) par chromatographie en phase gazeuse et la teneur en oxygène résiduel (en % de gaz de l'espace de tête) par mesure de la susceptibilité paramagnétique.

Les résultats de ce test sont réunis dans le tableau I ci-après:

TABLEAU I

| Echantillons | Durée d'entreposage | | | | | |
|---|---|---|---|---|---|---|
| | 1 mois | | 2 mois | | 3 mois | |
| | pentane ($10^{-9}$ M) | $O_2$(%) | pentane ($10^{-9}$ M) | $O_2$(%) | pentane ($10^{-9}$ M) | $O_2$(%) |
| sans vanilline (comparaison) | 4,3 | 18,8 | 9,1 | 17,6 | 13 | 16,4 |
| avec 100 $\mu$g/g de vanilline | 4,2 | 18,4 | 7,5 | 17,4 | 8 | 17,3 |
| avec 200 $\mu$g/g de vanilline | 3,2 | 18,5 | 4,8 | 17,6 | 6 | 17,3 |
| avec 500 $\mu$g/g de vanilline | 1,0 | 18,8 | 1,4 | 18,2 | 1,6 | 18 |

On voit qu'après un mois d'entreposage à 20°C la différence entre l'échantillon de comparaison et les échantillons avec vanilline s'affirme déjà, de manière d'autant plus nette que la quantité de vanilline ajoutée est plus grande. Après 2 et 3 mois, le ralentissement de la production de pentane et de la consommation d'oxygène par suite de l'adjonction de vanilline, autrement dit le ralentissement de l'oxydation, est très net.

Exemple 2

De manière semblable à celle décrite à l'exemple 1, on prépare quatre lots de flocons de céréales à partir de riz entier. Ces flocons présentent une humidité résiduelle de 3,9%.

On maintient un lot sans vanilline pour comparaison. On ajoute à sec en brassant bien des quantités respectives de 50 $\mu$g, 500 $\mu$g et 5000 $\mu$g de vanilline par g de flocons des deuxième, troisième et quatrième lots. On soumet les quatre lots à un test d'oxydation à 37°C selon une procédure semblable à celle décrite à l'exemple 1, ainsi qu'à un test de dégustation par des spécialistes, portant sur l'odeur dégagée par les échantillons. L'échelle de notes attribuées s'étend de 1 à 9, 1 représentant un produit très fortement oxydé, 9 un produit excellent, frais et 5 représentant la limite d'acceptabilité.

4

Les résultats de ces tests sont réunis dans le tableau II ci-après:

TABLEAU II

| Echantillons | Durée d'entreposage | | | | | | | | |
| | 3 mois | | | 4 mois | | | 6 mois | | |
| | pentane $(10^{-9}M)$ | $O_2$ (%) | dégustation | pentane $(10^{-9}M)$ | $O_2$ (%) | dégustation | pentane $(10^{-9}M)$ | $O_2$ (%) | dégustation |
| sans vanilline (comparaison) | 2,9 | 20,0 | 6,3 | 4,9 | 19,8 | 6 | | | 5,3 |
| avec 50 µg/g de vanilline | 1,7 | 20,5 | 7,7 | 1,7 | 20,2 | 7,5 | 3,1 | 19,5 | 7,3 |
| avec 500 µg/g de vanilline | 0,0 | 20,3 | 6,7 | 0,7 | 19,9 | 5 | 1,0 | 19,7 | 6,3 |
| avec 5000 µg/g de vanilline | 0,5 | 20,3 | 6,0 | 4,3 | 20,1 | 5,3 | 0,9 | 19,8 | 6,0 |

On voit que tous les résultats des tests d'oxydation sont probants alors que les tests de dégustation donnent des résultats correspondants dans la majorité des cas.

5

Exemple 3

De manière semblable à celle décrite à l'exemple 1, on prépare quatre lots de flocons de céréales à partir d'avoine entière. Ces flocons présentent une humidité résiduelle de 1,7%.

On maintient un lot sans vanilline pour comparaison. On ajoute à sec en brassant bien des quantités respectives de 50 $\mu$g, 500 $\mu$g et 5000 $\mu$g de vanilline par g de flocons des deuxième, troisième et quatrième lots.

On soumet les quatre lots à un test d'oxydation à 37°C selon une procédure semblable à celle décrite à l'exemple 1, ainsi qu'à un test de dégustation semblable à celui décrit à l'exemple 2.

Les résultats de ces tests sont réunis dans te tableau III ci-après:

TABLEAU III

| Echantillons | Durée d'entreposage | | | | | | | | |
|---|---|---|---|---|---|---|---|---|---|
| | 3 mois | | | 4 mois | | | 6 mois | | |
| | pentane $(10^{-9}M)$ | $O_2$ (%) | dégustation | pentane $(10^{-9}M)$ | $O_2$ (%) | dégustation | pentane $(10^{-9}M)$ | $O_2$ (%) | dégustation |
| sans vanilline (comparaison) | 3,4 | 19,8 | 6 | 77,2 | 9,4 | 2 | | | 1 |
| avec 50 μg/g de vanilline | 6,2 | 19,4 | 5,3 | 48,8 | 11,3 | 1 | | | 1 |
| avec 500 μg/g de vanilline | 1,1 | 20,3 | 6 | 2,1 | 19,7 | 5,7 | 4,2 | 18,7 | 5,3 |
| avec 5000 μg/g de vanilline | 0,5 | 20,3 | 5 | 0,5 | 19,9 | 5 | 2,3 | 19,3 | 5,7 |

On voit que les flocons sans vanilline s'oxydent fortement, du fait de la teneur en matière grasse relativement élevée de l'avoine. L'effet antioxydant de l'addition de vanilline en ressort de manière d'autant plus nette, qu'on l'observe par le test d'oxydation ou par la dégustation.

Exemple 4

Pour préparer des flocons de céréales précuits déshydratés, on prépare une dispersion aqueuse de 500 kg de farine d'avoine dans une quantité d'eau telle que la teneur en matière sèche de la dispersion soit de 40%.

On traite thermiquement la dispersion durant 60 s à 130°C par injection de vapeur et on la sèche sur cylindre jusqu'à une teneur en humidité résiduelle de 3,4%.

Après avoir prélevé quelques échantillons de flocons maintenus tels quels pour comparaison, on ajoute 200 $\mu$g de vanilline par g de flocons de céréales ainsi obtenus.

On soumet les flocons à des essais de conservation en boîtes de fer étamé laquées. Des dégustations par des spécialistes après 2, 4 et 8 mois révèlent un fort ralentissement de la dégradation oxydative des flocons auxquels on a ajouté de la vanilline, par rapport à celle des échantillons auxquels on n'en a pas ajouté.

**Revendications**

1. Procédé de protection d'un aliment contre l'oxydation, caractérisé par le fait que l'on ajoute de la vanilline à un aliment sous forme subdivisée et sèche, à raison de 5-5000 $\mu$g de vanilline par g de matière sèche de l'aliment.

2. Procédé selon la revendication 1, caractérisé par le fait que l'on ajoute la vanilline sous forme de poudre.

3. Procédé selon la revendication 1, caractérisé par le fait que l'on ajoute la vanilline sous forme de solution alcoolique.

**Claims**

1. A process for the protection of a food against oxidation, characterized in that vanillin is added to a food in subdivided and dry form in a quantity of 5 to 5000 ug vanillin per g food dry matter.

2. A process as claimed in claim 1, characterized in that the vanillin is added in powder form.

3. A process as claimed in claim 1, characterized in that the vanillin is added in the form of an alcoholic solution.

**Patentansprüche**

1. Verfahren zum Schützen eines Nahrungsmittels gegen Oxidation, dadurch gekennzeichnet, daß man zu einem Nahrungsmittel in unterteilter und getrockneter Form Vanillin in einer Menge von 5-5000 $\mu$g Vanillin je g Trockensubstanz des Nahrungsmittels hinzufügt.

2. Verfahren nach Anspruch 1, dadurch gekennzeichnet, daß man das Vanillin in Pulverform zusetzt.

3. Verfahren nach Anspruch 1, dadurch gekennzeichnet, daß man das Vanillin in der Form einer alkoholischen Lösung zusetzt.